# EUROPÄISCHE PATENTANMELDUNG

(11) **EP 2 743 548 A1**
(43) Veröffentlichungstag der Anmeldung: **18.06.2014**
(21) Anmeldenummer: 13195275.6
(22) Anmeldetag: 02.12.2013
(51) Int. Cl.: F16H 61/688, F16H 3/00, F16H 37/04

(54) **Verfahren zum Betreiben eines Doppelkupplungsgetriebes**

(30) Priorität: 12.12.2012 AT 505832012
(71) Anmelder: AVL List GmbH, 8020 Graz (AT)
(72) Erfinder: Hundsberger, Ernst, 4493 Wolfern (AT)
(74) Vertreter: Babeluk, Michael

(57) **Zusammenfassung**

Verfahren zum Betreiben eines Doppelkupplungsgetriebes (10), mit einer Eingangswelle (11), einer Ausgangswelle (12), einer Hauptwelle (13), einer erste Kupplung (18), einer zweite Kupplung (19), einer ersten Vorgelegewelle (16) und einer zweiten Vorgelegewelle (17), mit einem Bereichsgruppengetriebe (21). Ein lastschaltbarer Bereichsgruppenwechsel kann mit folgenden Schritten ermöglicht werden:
• Trennen der ersten Vorgelegewelle (16) von der Eingangswelle (11);
• Synchronisieren einer ersten Zahnradstufe (ZA1) mit der Ausgangswelle (12);
• Synchronisieren der ersten Vorgelegewelle (16) mit einer ersten Zahnradstufe (ZA1);
• Wechsel des Antriebes der Ausgangswelle (12) von der zweiten auf die erste Vorgelegewelle (17, 16);
• Drehmomentfreischalten eines Planetengetriebes (24) des Bereichsgruppengetriebes (21);
• Synchronisieren der zweiten Vorgelegewelle (17) mit der Eingangswelle (11);
• Verzögern der Hauptwelle (13) durch Synchronisieren mit der zweiten Vorgelegewelle (17) in einer Gangstufe der zweiten Vorgelegewelle (17) unterhalb der höchsten Gangstufe (6);
• Trennen der zweiten Vorgelegewelle (17) von der Eingangswelle (11) und von der Hauptwelle (13);
• Umschalten des Bereichsgruppengetriebes (21) auf eine schnelle Bereichsgruppe (HIGH);
• Vermindern der Drehzahl der zweiten Vorgelegewelle (17) durch Synchronisieren mit der Hauptwelle (13) in der niedrigsten Gangstufe (2) der zweiten Vorgelegewelle (17);
• Wechsel des Antriebes der Ausgangswelle (12) von der ersten auf die zweite Vorgelegewelle (16, 17);

## Beschreibung

Die Erfindung betrifft ein Verfahren zum Betreiben eines Doppelkupplungsgetriebes für ein Kraftfahrzeug, mit einer Eingangswelle, einer Ausgangswelle und einer Hauptwelle, wobei die Eingangswelle über eine schaltbare erste Kupplung die erste Vorgelegewelle und/oder über eine schaltbare zweite Kupplung die zweite Vorgelegewelle antreibt, und die erste und die zweite Vorgelegewelle jeweils über zumindest eine schaltbare Zahnradstufe die Hauptwelle antreibt, sowie mit einem ein Planetengetriebe aufweisenden Bereichsgruppengetriebe zum Umschalten zwischen einer langsamen und einer schnellen Bereichsgruppe. Weiters betrifft die Erfindung ein Doppelkupplungsgetriebe für ein Kraftfahrzeug, mit einer Eingangswelle, einer Ausgangswelle und einer Hauptwelle, wobei die Eingangswelle über eine erste Getriebestufe und eine koaxial zu einer ersten Vorgelegewelle angeordnete schaltbare erste Kupplung mit der ersten Vorgelegewelle und über eine koaxial zu einer zweiten Vorgelegewelle angeordneten schaltbare zweite Kupplung mit einer zweiten Vorgelegewelle antriebsverbindbar ist, wobei die erste Vorgelegewelle und die zweite Vorgelegewelle jeweils über zumindest eine über eine Schalteinrichtung schaltbare Zahnradstufe mit der Hauptwelle antriebsverbindbar ist, und wobei zwischen der Hauptwelle und einer Ausgangswelle des Doppelkupplungsgetriebes ein Bereichsgruppengetriebe angeordnet ist.

Die AT 510 966 B1 offenbart ein Doppelkupplungsgetriebe für ein Kraftfahrzeug, mit einer Eingangswelle und einer Hauptwelle, wobei die Eingangswelle über eine schaltbare erste Kupplung mit einer ersten Vorgelegewelle und über eine schaltbare zweite Kupplung mit einer zweiten Vorgelegewelle verbindbar ist. Die erste Vorgelegewelle und die zweite Vorgelegewelle ist jeweils über zumindest ein über eine Schalteinrichtung schaltbares Zahnradpaar mit der Hauptwelle antriebsverbindbar. Zwischen der Hauptwelle und einer Ausgangswelle des Getriebes ist ein Bereichsgruppengetriebe angeordnet. Als Synchronisierungseinrichtung ist eine Hydraulikeinheit vorgesehen, welche Hydraulikeinheit eine mit der ersten Vorgelegewelle antriebsverbundene erste hydraulische Maschine und eine mit der zweiten Vorgelegewelle antriebsverbundene zweite hydraulische Maschine aufweist.

Die Gänge solcher Doppelkupplungsgetriebe sind innerhalb einer Bereichsgruppe ohne Zugkraftunterbrechung schaltbar. Eine Umschaltung der Bereichsgruppe kann allerdings nur unter Trennung der Zugkraft bewerkstelligt werden.

Aus den Veröffentlichungen US 6,427,549 B1 und EP 1 270 301 A2 sind Doppelkupplungsgetriebe mit einer Eingangswelle und einer Ausgangswelle, sowie mit zwei Vorgelegewellen bekannt, wobei die Drehzahlen der Vorgelegewellen über Synchronisiereinrichtungen mit der Drehzahl der Ausgangswelle abstimmbar sind. Dabei wird die Drehzahl der nicht mit der Eingangswelle antriebsverbundenen Vorgelegewelle über einen Elektromotor angetrieben oder abgebremst, bis eine Synchronisierung mit einem auf der Vorgelegewelle frei laufenden Zahnrad erfolgt, welches über eine Getriebestufe mit der Ausgangswelle verbunden ist. Sobald eine Synchronisation vorliegt, wird das Zahnrad über eine Klauenkupplung mit der Vorgelegewelle antriebsverbunden.

Die DE 10 2007 018 967 A1 beschreibt ferner ein automatisiertes Gruppengetriebe für ein Fahrzeug mit einem Hauptgetriebe und zumindest einer vorgeschalteten und/oder nachgeschalteten Nachbereichsgruppe und mit zumindest einer Vorgelegewelle, wobei die Vorgelegewelle mit zumindest einer hydraulischen Anordnung in Wirkverbindung steht, um einen Nebenabtrieb vorzusehen. Die hydraulische Anordnung weist zumindest ein Antriebsaggregat zum Steuern und/oder Regeln jeder Vorgelegewelle auf.

Die EP 2 149 725 B1 offenbart eine Getriebeeinheit mit einem Doppelkupplungsgetriebe und einem Gruppengetriebe, wobei eine der Doppelkupplungsgetriebeeingangswellen als Hohlwelle und die andere als Vollwelle ausgeführt ist. Um die Schaltgruppe unter Last zu wechseln, müssen der höchste Vorwärtsgetriebegang der langsamen Schaltgruppe und der niedrigste Vorwärtsgetriebegang der schnellen Schaltgruppe gleichzeitig geschaltet werden. Dabei ist der oberste Vorwärtsgetriebegang der unteren Schaltgruppe und der unterste Vorwärtsgetriebegang der oberen Schaltgruppe mit einem gleichen Übersetzungsverhältnis ausgeführt. Dadurch weist das Getriebe effektiv eine höhere Gangzahl als Übersetzungsanzahl auf. Das Getriebe weist somit - im Vergleich zur effektiven Zahl an Übersetzungen - einen hohen baulichen und räumlichen Aufwand auf.

Aufgabe der Erfindung ist es, mit möglichst geringem baulichen und räumlichen Aufwand mit einem Doppelkupplungsgetriebe der eingangs genannten Art einen lastschaltbaren Bereichsgruppenwechsel zu ermöglichen.

Erfindungsgemäß wird dies dadurch erreicht, dass für einen zugkraftunterbrechungsfreien Hochschaltvorgang von der langsamen Bereichsgruppe in die schnelle Bereichsgruppe - ausgehend von einer höchsten Gangstellung der Zahnradstufen der zweiten Vorgelegewelle bei geschlossener erster und zweiter Kupplung und einer in Neutralposition befindenden Schaltmuffe der weiteren Schalteinrichtung - folgende Schritte durchgeführt werden:

Im Folgenden wird neben der Drehzahlgleichstellung zwischen zwei Wellen auch eine Drehzahlanpassung zwischen zwei durch eine Zahnradübersetzung miteinander verbundenen Wellen als Synchronisation bezeichnet.
● Öffnen der ersten Kupplung: Die erste Vorgelegewelle wird von der Eingangswelle getrennt. Der Antrieb der Ausgangswelle erfolgt nur durch die zweite Vorgelegewelle.
● Verbinden der Schaltmuffe der weiteren Schalteinrichtung mit der Ausgangswelle: Das zweite Losrad der ersten Zahnradstufe wird mit der Drehzahl der Ausgangswelle angetrieben - die erste Zahnradstufe wird also mit der Ausgangswelle synchronisiert.
● Einlegen der ersten Zahnradstufe der ersten Vorgelegewelle: Die Drehzahl der ersten Vorgelegewelle wird - entsprechend der Übersetzung der ersten Zahnradstufe- an die Drehzahl des ersten Losrades der ersten Zahnradstufe angepasst, beispielsweise vermindert. Die erste Vorgelegewelle wird somit mit der ersten Zahnradstufe synchronisiert.
● Schließen der ersten Kupplung bei gleichzeitigem Öffnen der zweiten Kupplung: Der Antrieb der Ausgangswelle erfolgt nun durch die erste Vorgelegewelle. Die Drehzahl der Eingangswelle wird entsprechend angepasst.
● Umschalten des Bereichsgruppengetriebes in eine Neutralposition: Das Planetengetriebe ist somit momentenfrei geschaltet. Das Hohlrad des Planetengetriebes wird beschleunigt.
● Schließen der zweiten Kupplung: Die zweite Vorgelegewelle wird dadurch - entsprechend der verringerten Drehzahl der Eingangswelle - abgebremst, die zweite Vorgelegewelle mit der Eingangswelle synchronisiert.
● Einlegen einer niedrigeren, vorzugsweise der zweithöchsten, Gangstellung der zweiten Vorgelegewelle: Die Drehzahl der Hauptwelle wird entsprechend der gewählten niedrigeren Gangstellung durch Synchronisieren mit der zweiten Vorgelegewelle vermindert. Das Hohlrad des Planetengetriebes wird weiter beschleunigt.
● Öffnen der zweiten Kupplung;
● Deaktivieren der niedrigeren Gangstellung der zweiten Vorgelegewelle: Die zweite Vorgelegewelle ist somit momentenfrei geschaltet.
● Umschalten des Bereichsgruppengetriebes auf die schnelle Bereichsgruppe: Das Planetengetriebe wird geblockt, die Eingangsdrehzahl des Planetengetriebes entspricht der Ausgangsdrehzahl. Das Hohlrad des Planetengetriebes und die Hauptwelle synchronisieren mit der Drehzahl der Ausgangswelle.
● Vorzugsweise kann ein Schließen der zweiten Kupplung durchgeführt werden, um die Kupplung zu entlasten (normaly closed cupling) beziehungsweise die Verluste zu minimieren.
● Einlegen der niedrigsten Gangstellung der zweiten Vorgelegewelle: Die Drehzahl der zweiten Vorgelegewelle wird entsprechend der Übersetzung der zweiten Zahnradstufe durch Synchronisation mit der Hauptwelle vermindert.
● Schließen der zweiten Kupplung bei gleichzeitigem Öffnen der ersten Kupplung: Die Drehzahl der Eingangswelle wird entsprechend reduziert. Der Antrieb der Ausgangswelle erfolgt nun durch die zweite Vorgelegewelle.
● Danach kann die erste Zahnradstufe wieder deaktiviert und die ersten Kupplung geschlossen werden. Damit kann die erste Vorgelegewelle entsprechend der Drehzahl der Eingangswelle abgebremst werden.

Weiters können für einen zugkraftunterbrechungsfreien Runterschaltvorgang von der schnellen Bereichsgruppe in die langsame Bereichsgruppe - ausgehend von einer niedrigsten Gangstellung der Zahnradstufen der zweiten Vorgelegewelle bei geschlossener erster und zweiter Kupplung und einer sich in drehfester Verbindung mit der Ausgangswelle befindenden Schaltmuffe der weiteren Schalteinrichtung - folgende Schritte durchgeführt werden:
● Öffnen der ersten Kupplung: Die erste Vorgelegewelle wird von der Eingangswelle getrennt. Der Antrieb der Ausgangswelle erfolgt nur durch die zweite Vorgelegewelle, wobei auf Grund der Schaltstellung des Bereichsgruppengetriebes das Planetengetriebe des Bereichsgruppengetriebes geblockt wird und die Drehzahl der Ausgangswelle der Drehzahl der Hauptwelle entspricht.
● Einlegen der ersten Zahnradstufe der ersten Vorgelegewelle: Die Drehzahl der ersten Vorgelegewelle wird - entsprechend der Übersetzung der ersten Zahnradstufe- an die Drehzahl des ersten Losrades der ersten Zahnradstufe angepasst, beispielsweise erhöht. Es erfolgt eine Synchronisation der ersten Vorgelegewelle mit der Ausgangswelle.
● Schließen der ersten Kupplung bei gleichzeitigem Öffnen der zweiten Kupplung: Der Antrieb der Ausgangswelle erfolgt nun durch die erste Vorgelegewelle. Die Drehzahl der Eingangswelle wird entsprechend erhöht.
● Deaktivieren der niedrigsten Gangstellung der zweiten Vorgelegewelle;
● Schließen der zweiten Kupplung: Die zweite Vorgelegewelle wird dadurch - entsprechend der erhöhten Drehzahl der Eingangswelle - beschleunigt und mit der Eingangselle synchronisiert.
● Schalten des Bereichsgruppengetriebes in eine Neutralposition: Das Planetengetriebe ist somit momentenfrei geschaltet. Das Hohlrad des Planetengetriebes wird verzögert.
● Einlegen einer höheren, vorzugsweise der zweithöchsten, Gangstellung der zweiten Vorgelegewelle: Die Drehzahl der Hauptwelle wird entsprechend der gewählten höheren Gangstellung erhöht und mit der zweiten Vorgelegewelle synchronisiert. Das Hohlrad des Planetengetriebes wird weiter verzögert. Vorzugsweise kann die höhere Gangstellung der zweiten Vorgelegewelle deaktiviert und gleich darauf die höchste Gangstellung der zweiten Vorgelegewelle eingelegt werden. Die Drehzahl der Hauptwelle wird dadurch entsprechend der gewählten höchsten Gangstellung der zweiten Vorgelegewelle weiter erhöht. Das Hohlrad des Planetengetriebes wird weiter verzögert.
● Öffnen der zweiten Kupplung;
● Umschalten des Bereichsgruppengetriebes auf die langsame Bereichsgruppe: Das Hohlrad des Planetengetriebes wird festgehalten.
● Schließen der zweiten Kupplung bei gleichzeitigem Öffnen der ersten Kupplung: Der Antrieb der Ausgangswelle erfolgt nun durch zweite Vorgelegewelle. Die Drehzahl der Eingangswelle wird entsprechend erhöht.
● Danach kann die ersten Zahnradstufe der ersten Vorgelegewelle ausgelegt und die erste Kupplung geschlossen werden. Die Drehzahl der ersten Vorgelegewelle wird somit entsprechend der Drehzahl der Eingangswelle erhöht.

Das Verfahren kann besonders vorteilhaft mit einem Doppelkupplungsgetriebe der eingangs genannten Art durchgeführt werden, bei dem zumindest eine Vorgelegewelle, vorzugsweise die erste Vorgelegewelle, über eine schaltbare erste oder zweite Zahnradstufe und eine weitere Schalteinrichtung wahlweise mit der Hauptwelle oder mit der Ausgangswelle antriebsverbindbar ist, wobei vorzugsweise die weitere Schalteinrichtung koaxial zur Hauptwelle und/oder Ausgangswelle angeordnet ist.

Die erste und/oder zweite Zahnradstufe kann dabei ein koaxial zur ersten oder zweiten Vorgelegewelle angeordnetes erstes Losrad und ein koaxial zur Hauptwelle angeordnetes zweites Losrad aufweisen. Dabei ist vorzugsweise das zweite Losrad drehfest mit einer Schaltmuffe der weiteren Schalteinrichtung verbunden, wobei die Schaltmuffe in einer ersten Schaltstellung mit der Hauptwelle und in einer zweiten Schaltstellung mit der Ausgangswelle drehfest verbunden ist.

Die erste und die zweite Kupplung ist vorteilhafterweise als nasslaufende Lamellenkupplung ausgebildet, wodurch hohe Drehmomente bei kleinem Bauraum und geringem Gewicht übertragbar sind.

Vorzugsweise ist die erste Kupplung koaxial zur ersten Vorgelegewelle und die zweite Kupplung koaxial zur zweiten Vorgelegewelle angeordnet. Die beiden Kupplungen können baugleich ausgelegt werden, um die Herstellungskosten zu minimieren.

Um den Fertigungsaufwand so gering wie möglich zu halten, ist es vorteilhaft, wenn zumindest eine Zahnradgruppe der ersten Vorgelegewelle und der zweiten Vorgelegewelle baugleich ausgebildet ist. Durch die Verwendung von möglichst vielen Gleichteilen können somit die Kosten sehr gering gehalten werden.

In einer besonders bevorzugten Ausführung der Erfindung ist vorgesehen, dass das Bereichsgruppengetriebe ein Planetengetriebe aufweist, welches als einfaches Stirnradplanetengetriebe ausgebildet sein kann. Auf diese Weise können besonders hohe Übersetzungsverhältnisse und die für eine praktikable Gangabstufung erforderliche Anzahl der Gänge mit einer geringen Anzahl von Bauteilen realisiert werden. Das Bereichsgruppengetriebe kann dabei zwei Bereichsgruppen - eine langsame und eine schnelle Bereichsgruppe - aufweisen. Die weitere Schalteinrichtung kann dabei mit dem Planetenträger des Planetengetriebes antriebsverbindbar sein.

Besonders vorteilhaft ist es, wenn die Eingangswelle über eine erste Getriebestufe mit der ersten Vorgelegewelle und über eine zweite Getriebestufe mit der zweiten Vorgelegewelle verbunden ist, wobei vorzugsweise die erste und die zweite Getriebestufe unterschiedliche Übersetzungsverhältnisse aufweisen. Durch die unterschiedlichen Übersetzungsstufen werden die Vorgelegewellen mit unterschiedlichen Drehzahlen angetrieben.

Bei einer besonders vorteilhaften weiteren Ausführung entspricht der Übersetzungssprung zwischen erster und zweiter Getriebestufe dem gewünschten Übersetzungssprung zwischen den einzelnen Getriebegängen, wodurch eine baugleiche Ausbildung der Zahnradgruppen an den beiden Vorgelegewellen ermöglicht wird.

Zum Unterschied zur EP 2 149 725 B1 ist beim erfindungsgemäßen Verfahren ein gleichzeitiges Schalten der Schaltgruppen nicht erforderlich Der kleinste Gang der schnellen Bereichsgruppe wird beim Hochschalten nicht eingelegt, sondern zählt als größter Gang der langsamen Bereichsgruppe - die schnelle Bereichsgruppe wird vorgewählt und erst im zweiten Gang der schnellen Bereichsgruppe aktiv.

Um einen direkten Durchtrieb zu ermöglichen, kann in weiterer Ausführung der Erfindung vorgesehen sein, dass die Eingangswelle mit der Hauptwelle direkt über eine weitere Schalteinrichtung verbindbar ist.

Das Doppelkupplungsgetriebe kann modular aufgebaut sein und aus einem Kupplungsteil, einem Hauptgetriebeteil und dem Bereichsgruppengetriebeteil bestehen, vorzugsweise die weitere Schalteinrichtung im Hauptgetriebeteil angeordnet ist. Somit kann es für unterschiedliche Einsatzgebiete und Fahrzeuge, wie zum Beispiel Autobusse, Lastkraftwagen, Straßenfahrzeuge und Geländefahrzeuge angewendet werden.

Die Erfindung wird im Folgenden anhand der Figuren näher erläutert. Es zeigen:

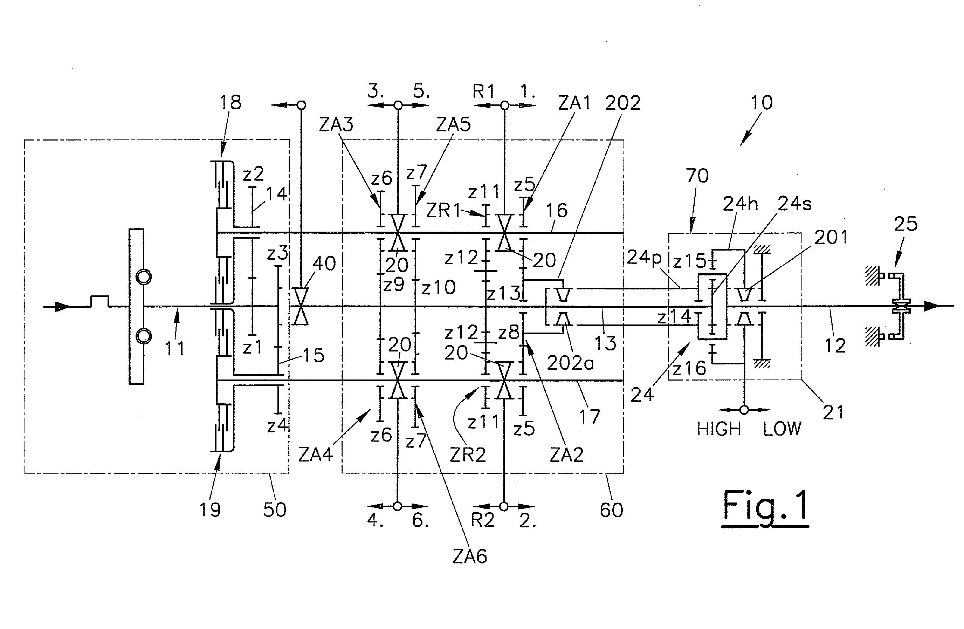

- Fig. 1: ein erfindungsgemäßes Doppelkupplungsgetriebe;
- Fig. 2: bis Fig. 17 verschiedene Schritte während des erfindungsgemäßen Verfahrens bei einem Hochschaltvorgang; und
- Fig. 18: bis Fig. 29 verschiedene Schritte während des erfindungsgemäßen Verfahrens bei einem Runterschaltvorgang.

Die Fig. zeigen schematisch ein erfindungsgemäßes Doppelkupplungsgetriebe 10 mit zwölf Vorwärtsgängen und zwei Rückwärtsgängen.

Die unterschiedlichen Gangstufen sind in der Fig. mit den Bezugszeichen 1, 2, 3, 4, 5, 6 für die Vorwärtsgänge und R1, R2 für die Rückwärtsgänge bezeichnet.

Das in den Fig. dargestellte Doppelkupplungsgetriebe 10 weist eine mit einer nicht weiter dargestellten Brennkraftmaschine verbundene Eingangswelle 11 und eine mit einer Ausgangswelle 12 verbundene Hauptwelle 13 auf. Die Eingangswelle 11 steht über einstufige erste bzw. zweite Getriebestufen 14, 15, welche unterschiedliche Übersetzungsverhältnisse aufweisen, mit jeweils einer ersten Vorgelegewelle 16 und einer zweiten Vorgelegewelle 17 in Verbindung. Zwischen der ersten Getriebestufe 14 und der ersten Vorgelegewelle 16 ist eine erste schaltbare Kupplung 18, zwischen der zweiten Getriebestufe 15 und der zweiten Vorgelegewelle 17 eine schaltbare zweite Kupplung 19 angeordnet. Die Kupplungen 18 und 19 sind als nasslaufende Lamellenkupplungen ausgebildet. Die ersten und zweiten Kupplungen 18, 19 können jeweils in der geschlossenen Stellung federbelastet sein, wodurch keine aktive Kraftaufbringung erforderlich ist, um die Antriebsverbindung zwischen der Eingangswelle 11 und der jeweiligen Vorgelegewelle 16, 17 herzustellen. Aus sicherheitsrelevanten Gründen kann aber auch zumindest bei einer der beiden Kupplungen 18, 19 das Schließen mit hydraulischem Druck anstelle mit einer Schließfeder erfolgen.

Im Antriebsstrang des Doppelkupplungsgetriebes 10 ist weiters ein mit der Hauptwelle 13 verbundenes Bereichsgruppengetriebe 21 vorgesehen, mit welchem ein Umschalten zwischen hohen Übersetzungsverhältnissen - schnelle Bereichsgruppe HIGH - und niedrigen Übersetzungsverhältnissen - langsame Bereichsgruppe LOW - möglich ist. In einer kompakten Ausführung kann das Bereichsgruppengetriebe 21 als Planetengetriebe 24 ausgebildet sein, wobei ein Element des Planetengetriebes 24 - beispielsweise das Hohlrad 24h - über eine Schalteinrichtung 201 festgehalten oder mit einem zweiten Element des Planetengetriebes 24 - beispielsweise den Planetenträger 24p - verbunden werden kann. Das Sonnenrad 24s des Planetengetriebes kann mit der Hauptwelle 13 verbunden sein.

Mit Bezugszeichen 25 ist eine mit der Hauptwelle 13 oder Ausgangswelle 12 verbundene Parksperre bezeichnet.

Die Vorgelegewellen 16, 17 stehen jeweils über Zahnradstufen ZA1, ZA2, ZA3, ZA4, ZA5, ZA6, ZR1, ZR2 mit der Hauptwelle 13 in Verbindung.

Die Zahnräder der Zahnradstufen ZA1, ZA2, ZA3, ZA4, ZA5, ZA6, ZR1, ZR2, der Getriebestufen 14, 15 und des Bereichsgruppengetriebes 21 sind mit z1, z2, z3, z4, z5, z6, z7, z8, z9, z10, z11, z12, z13, z14, z15, z16 bezeichnet, wobei baugleiche Zahnräder mit dem gleichen Bezugszeichen versehen sind.

Jede Zahnradstufe ZA3, ZA4, ZA5, ZA6, ZR1, ZR2 weist jeweils zumindest ein frei auf einer Welle - zum Beispiel einer Vorgelegewelle 16, 17 -umlaufendes Losrad z5, z6, z7, z11 und ein mit einer anderen Welle - zum Beispiel der Hauptwelle 13 - drehfest verbundenes Festrad z9, z10, z13 auf. Die Zahnradstufen ZR1, ZR2 der Rückwärtsgänge R1, R2 weisen zusätzlich noch ein Umkehrzahnrad z12 auf. Um Herstellungskosten zu sparen, können jeweils zwei auf den Vorgelegewellen 16, 17 gegenüberliegende Zahnräder als Gleichteile ausgebildet sein. Die Losräder können freilaufend auf den Vorgelegewellen 16, 17 gelagert sein und stehen mit drehfest mit der Hauptwelle 13 verbundenen Festrädern im Zahnreingriff. Dabei können zwei gegenüberliegend in jeweils einer Zahnradebene auf verschiedenen Vorgelegewellen 16, 17 angeordnete Losräder jeweils mit einem gemeinsamen Festrad der Hauptwelle 13 kämmen. Um jeweils die frei umlaufenden Losräder z5, z6, z7, z11 mit der jeweiligen Vorgelegewelle 16, 17 antriebsfest zu verbinden, sind Schaltelemente 20 vorgesehen, welche durch Synchronisiereinheiten oder - insbesondere im Falle von externen elektrischen oder hydraulischen Synchronisiereinrichtungen - durch einfache, nichtsynchronisierte Klauenkupplungen gebildet werden können. Die Schaltelemente 20 können über nicht weiter dargestellte Aktuatoren beispielsweise hydraulisch betätigt werden.

Zum Unterschied zu den Zahnradstufen ZA3, ZA4, ZA5, ZA6, ZR1, ZR2 sind die koaxial zur jeweiligen Vorgelegewelle 16, 17 angeordneten ersten Losräder z5 der ersten und zweiten Zahnradstufen ZA1, ZA2 nicht mit einem Festrad, sondern mit einem drehbar um die Hauptwelle 13 gelagerten zweiten Losrad z8 im Zahneingriff. Das zweite Losrad z8 kann über eine weitere Schalteinrichtung 202 wahlweise mit der Hauptwelle 13 oder mit der Ausgangswelle 12 verbunden werden.

Die über die Schalteinrichtung 202 schaltbare zusätzliche Zahnradstufe ZA1, ZA2 wirkt dabei in einer Schaltstellung über das von der Hautwelle 13 getrennte Losrad z8 über die Hauptwelle 13 auf das Sonnenrad 24s des Planetengetriebes 24 und in der andren Schaltstellung über den Planetenträger 24p des Planetengetriebes 24 des Bereichsgruppengetriebes 21 direkt auf die Ausgangswelle 12 ein. In der Ausführungsvariante ist dabei das Losrad z8 fest mit der Schaltmuffe 202a verbunden, was eine kompakte und teilesparende Anordnung ermöglicht.

Im Antriebsfall ist eine der beiden Vorgelegewellen 16, 17 über die jeweilige Kupplung 18, 19 mit der Eingangswelle 11 antriebsverbunden, während die jeweils andere Vorgelegewelle 17, 16 von der Antriebswelle 11 getrennt ist.

Die antriebsverbundene Vorgelegewelle, beispielsweise die zweite Vorgelegewelle 17, ist über eine eingelegte Gangstufe, beispielsweise Gangstufe 6 mit der Hauptwelle 13 antriebsverbunden. Im Antriebsfall ist die Hauptwelle 13 über die auf HIGH oder LOW geschaltete Schalteinrichtung 201 des Bereichsgruppengetriebes 21 mit der Ausgangswelle 12 und über eine geschaltete Gangstufe, beispielsweise Gangstufe 6, mit der zweiten Vorgelegewelle 17 antriebsverbunden. Über die zweite Kupplung 19 erfolgt somit ein Kraftfluss bis zur Ausgangswelle 12.

Im dargestellten Ausführungsbeispiel ist die Eingangswelle 11 weiters mit der Hauptwelle 13 auch direkt über eine weitere Schalteinrichtung 40 verbindbar. Dadurch kann ein direkter Durchtrieb zwischen der Eingangswelle 11 und der Hauptwelle 13 ermöglicht werden.

Das Doppelkupplungsgetriebe 10 kann modular aufgebaut sein und aus einem Kupplungsteil 50, einem Hauptgetriebeteil 60 und dem Bereichsgruppengetriebeteil 70 bestehen, und somit für unterschiedliche Einsatzgebiete und Fahrzeuge, wie zum Beispiel Autobusse, Lastkraftwagen, Straßenfahrzeuge und Geländefahrzeuge Anwendung finden.

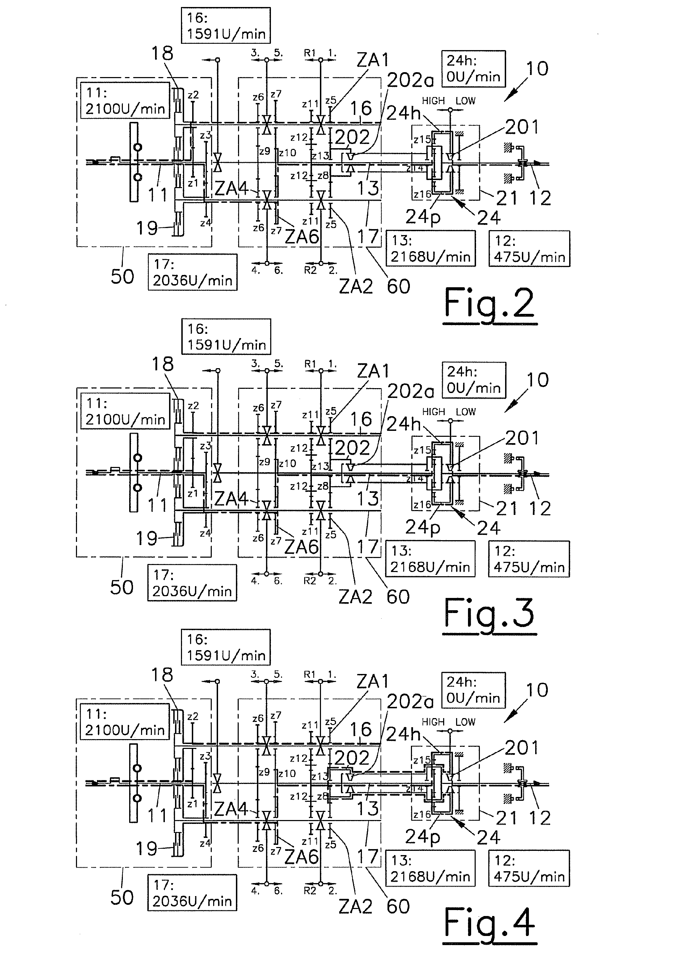

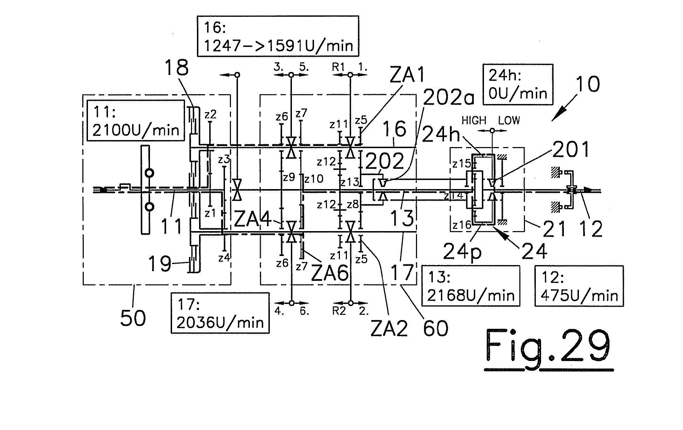

Die Fig. 2 bis Fig. 29 zeigen einzelne Verfahrensschritte bei Hochschalt- und Runterschaltvorgängen zwischen den Bereichsgruppen LOW und HIGH an Hand eines konkreten Beispiels. Dabei sind durch gestrichelte Linien die aktiven Antriebspfade über der erste Vorgelegewelle 16 und durch strichpunktierte Linien die aktiven Antriebspfade über der zweite Vorgelegewelle 17 angedeutet. Weiters sind für das Ausführungsbeispiel für jeden Verfahrenschritt die Drehzahlen der Eingangswelle 1, der ersten und zweiten Vorgelegewellen 16, 17, der Hauptwelle 13, der Ausgangswelle 12 und des Hohlrades 24h des Planetengetriebes 24 angegeben.

### Hochschaltvorgang :

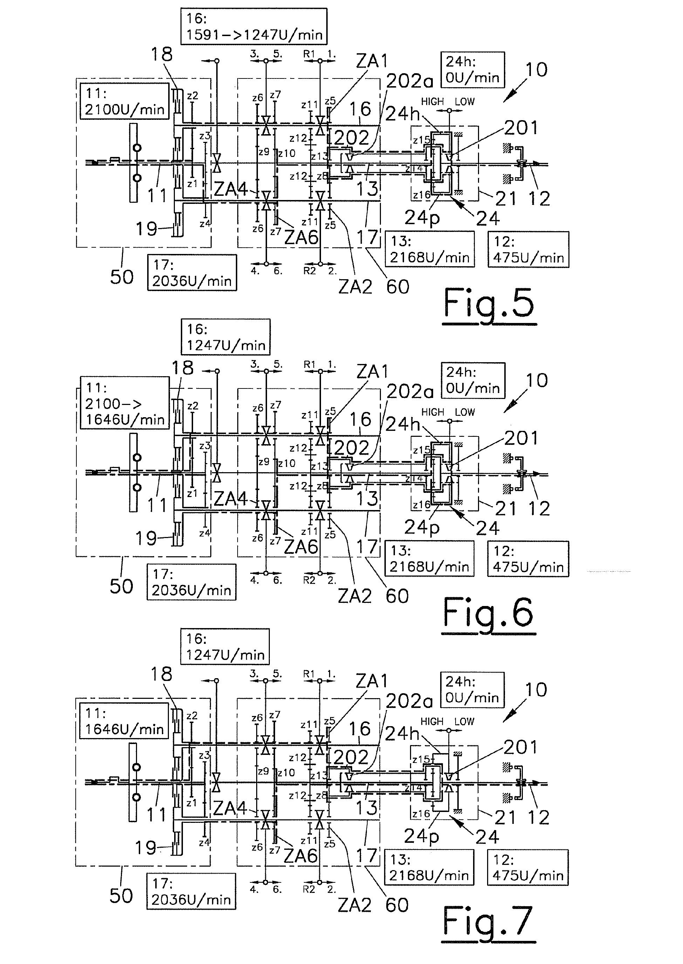

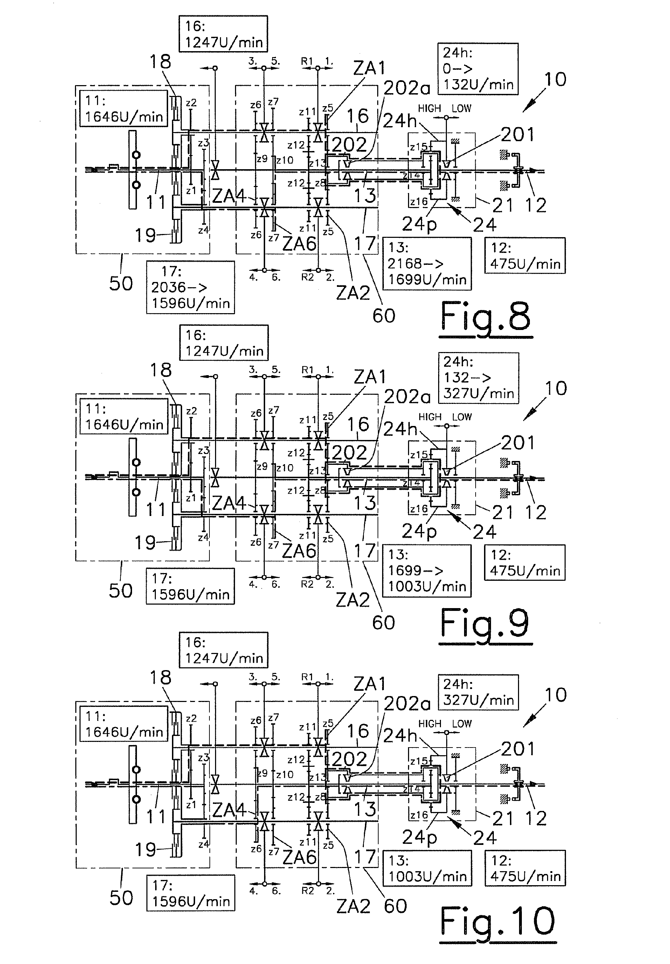

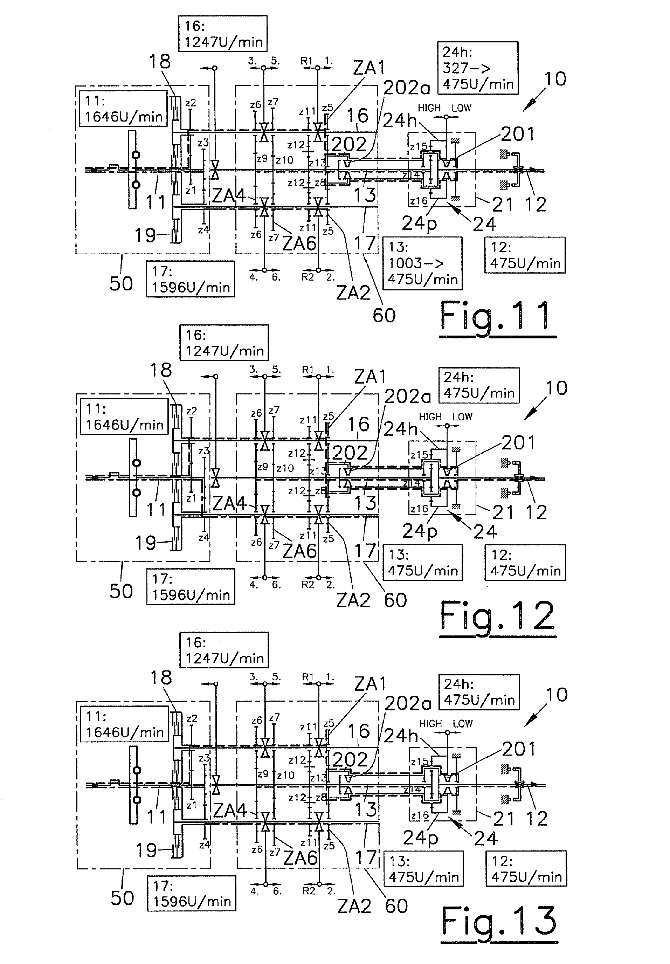

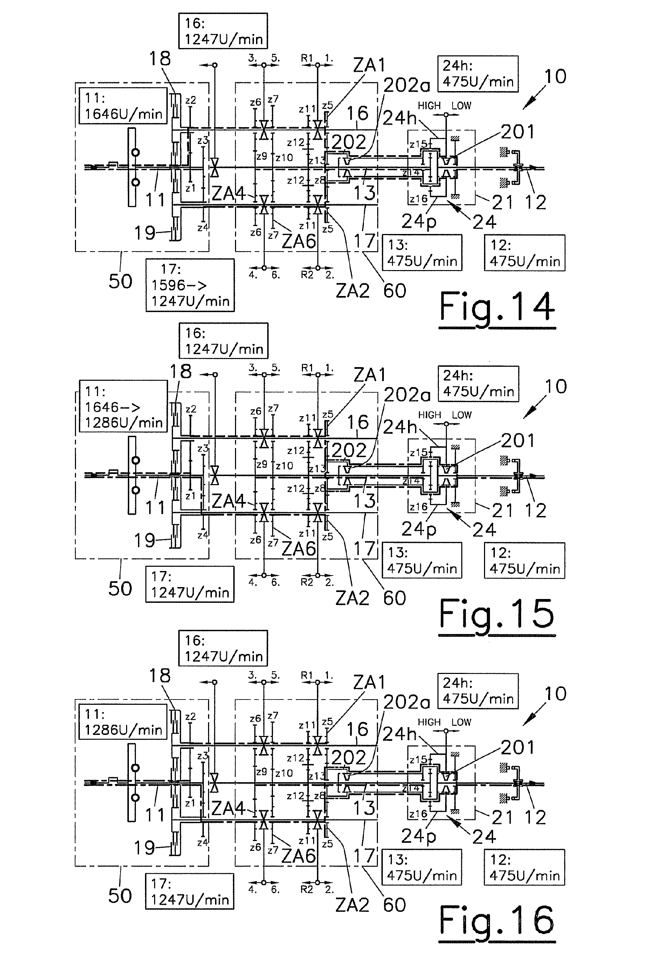

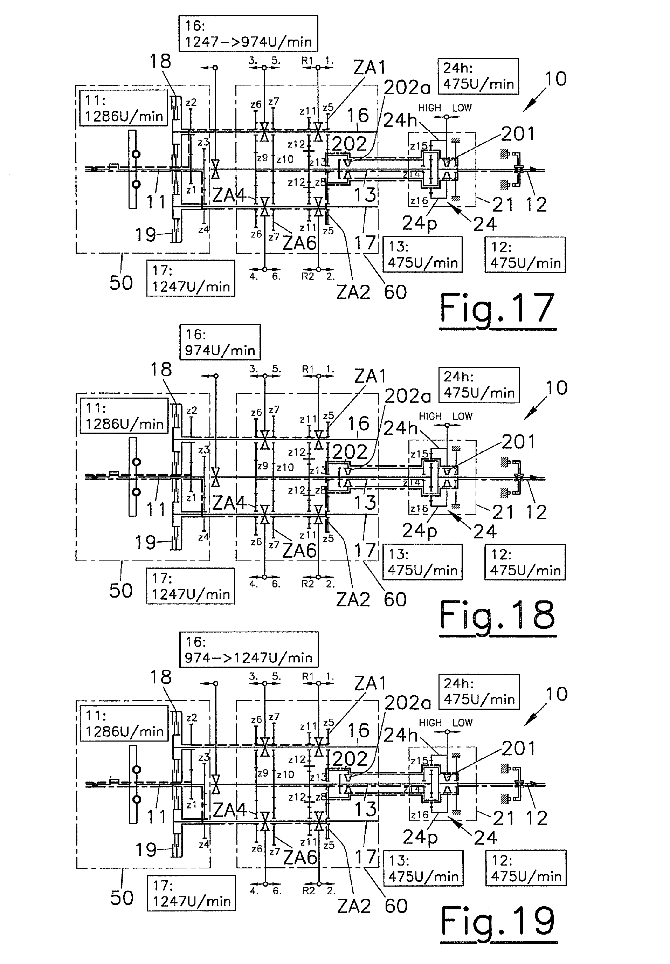

Ist der höchste Gang 6 im Hauptgetriebe 60 der langsameren Bereichsgruppe LOW erreicht, so erfolgt ein weiteres Hochschalten in einen niedrigen Gang der schnellen Bereichsgruppe HIGH - ausgehend von einer höchsten Gangstellung 6 aller Zahnradstufen ZA2, ZA4, ZA6 der zweiten Vorgelegewelle 17 bei geschlossener erster und zweiter Kupplung 18, 19 und einer in Neutralposition befindenden Schaltmuffe 202a der weiteren Schalteinrichtung 202 (Ausgangsposition siehe Fig. 2) - durch folgende Schritte:
● Öffnen der ersten Kupplung 18: Die erste Vorgelegewelle 16 wird von der Eingangswelle 11 getrennt. Der Antrieb der Ausgangswelle 12 erfolgt nur durch die zweite Vorgelegewelle 17 (Fig. 3).
● Verbinden der Schaltmuffe 202a der weiteren Schalteinrichtung 202 mit der Ausgangswelle 12 bzw. mit dem Planetenträger 24p: Das zweite Losrad z8 der ersten Zahnradstufe ZA1 wird mit der gleichen Drehzahl wie die Ausgangswelle 13 angetrieben (Fig. 4).
● Aktivieren der ersten Zahnradstufe ZA1 der ersten Vorgelegewelle 16: Die Drehzahl der ersten Vorgelegewelle 16 wird - entsprechend der Übersetzung der ersten Zahnradstufe ZA1 - an die Drehzahl des ersten Losrades z8 der ersten Zahnradstufe angepasst, hier also vermindert (Fig. 5).
● Schließen der ersten Kupplung 18 bei gleichzeitigem Öffnen der zweiten Kupplung 19: Der Antrieb der Ausgangswelle 12 erfolgt nun durch die erste Vorgelegewelle 16. Die Drehzahl der Eingangswelle 11 wird entsprechend angepasst (Fig. 6).
● Umschalten der Schalteinrichtung 201 des Bereichsgruppengetriebes 21 in eine Neutralposition: Das Planetengetriebe 24 ist somit momentenfrei geschaltet. Das Hohlrad 24h des Planetengetriebes 24 wird beschleunigt (Fig. 7).
● Schließen der zweiten Kupplung 19: Die zweite Vorgelegewelle 17 wird dadurch - entsprechend der verringerten Drehzahl der Eingangswelle 11 - abgebremst, die zweite Vorgelegewelle 17 mit der Eingangswelle 11 synchronisiert (Fig. 8).
● Einlegen einer niedrigeren, vorzugsweise der zweithöchsten, Gangstellung 4 der zweiten Vorgelegewelle 17: Die Drehzahl der Hauptwelle 13 wird entsprechend der gewählten niedrigeren Gangstellung 4 durch Synchronisieren mit der zweiten Vorgelegewelle 17 vermindert. Das Hohlrad 24h des Planetengetriebes 24 wird weiter beschleunigt (Fig. 9).
● Öffnen der zweiten Kupplung 17 (Fig. 10);
● Deaktivieren der niedrigeren Gangstellung 4 der zweiten Vorgelegewelle 17: Die zweite Vorgelegewelle 17 ist somit momentenfrei geschaltet. (Fig. 11).
● Umschalten des Bereichsgruppengetriebes auf die schnelle Bereichsgruppe: Das Planetengetriebe wird geblockt, die Eingangsdrehzahl des Planetengetriebes entspricht der Ausgangsdrehzahl. Das Hohlrad des Planetengetriebes und die Hauptwelle Synchronisieren mit der Drehzahl der Ausgangswelle (Fig. 11).
● Durch ein Schließen der zweiten Kupplung 19 können Verluste minimiert werden (Fig. 12, Fig. 13).
● Einlegen der niedrigsten Gangstellung 2 der zweiten Vorgelegewelle 17: Die Drehzahl der zweiten Vorgelegewelle 17 wird entsprechend der Übersetzung der zweiten Zahnradstufe ZA2 durch Synchronisation mit der Hauptwelle 13 vermindert (Fig. 14).
● Schließen der zweiten Kupplung 17 bei gleichzeitigem Öffnen der ersten Kupplung 18: Die Drehzahl der Eingangswelle 11 wird entsprechend reduziert. Der Antrieb der Ausgangswelle 12 erfolgt nun durch die zweite Vorgelegewelle 17 (Fig. 15).
● Danach kann die erste Zahnradstufe ZA1 wieder deaktiviert und die erste Kupplung 18 geschlossen werden. Damit kann die erste Vorgelegewelle 16 entsprechend der Drehzahl der Eingangswelle 11 abgebremst und für weitere Schaltvorgänge vorbereitet werden (Fig. 16, Fig. 17).

### Runterschaltvorgang:

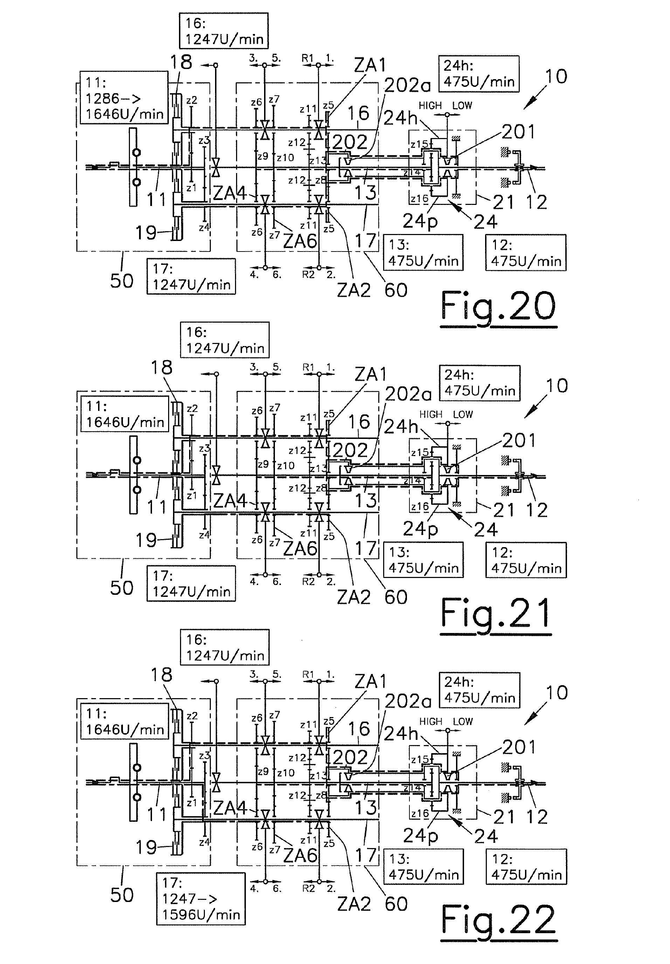

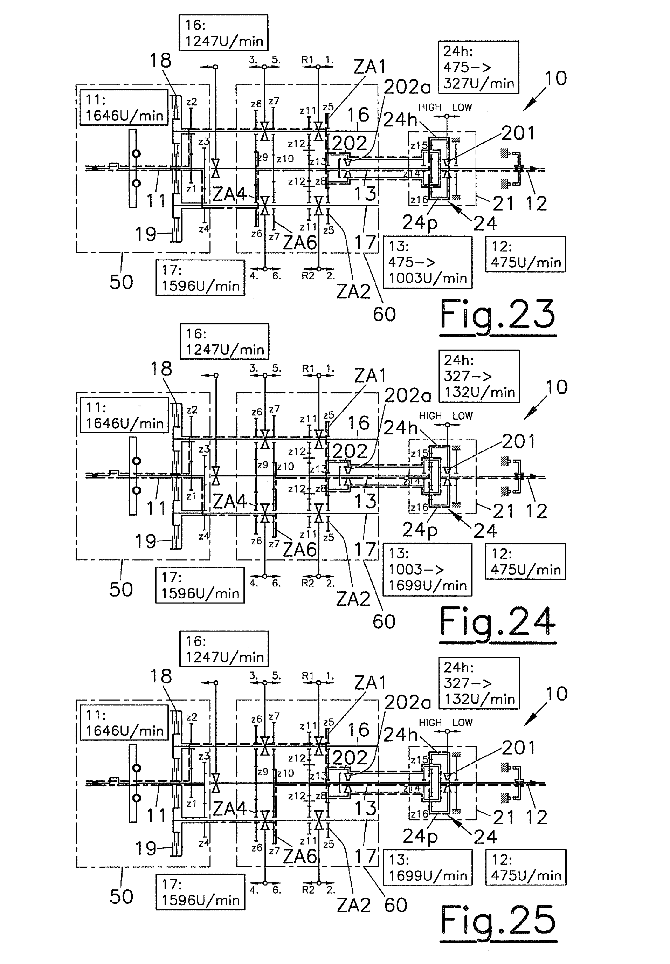

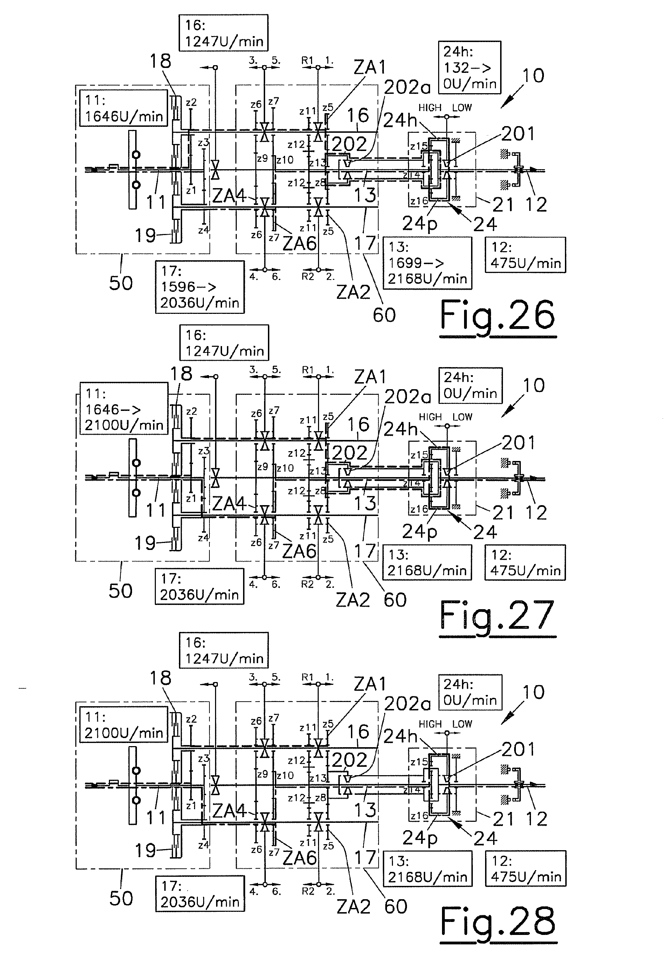

Ist der niedrigste Gang 1 im Hautgetriebe 60 der schnelleren Bereichsgruppe HIGH erreicht, so erfolgt ein weiteres Runterschalten in einen hohen Gang der langsamen Bereichsgruppe LOW - ausgehend von einer niedrigsten Gangstellung aller Zahnradstufen ZA2, ZA4, ZA6 der zweiten Vorgelegewelle 17 bei geschlossener erster und zweiter Kupplung 18, 19 und einer sich in drehfester Verbindung mit der Ausgangswelle 12 befindenden Schaltmuffe 202a der weiteren Schalteinrichtung 202 - durch folgende Schritte:
● Öffnen der ersten Kupplung 18: Die erste Vorgelegewelle 16 wird von der Eingangswelle 11 getrennt. Der Antrieb der Ausgangswelle 12 erfolgt nur durch die zweite Vorgelegewelle 17, wobei auf Grund der Schaltstellung des Bereichsgruppengetriebes 21 das Planetengetriebe 24 des Bereichsgruppengetriebes 21 geblockt wird und die Drehzahl der Ausgangswelle 12 der Drehzahl der Hauptwelle 13 entspricht (Fig. 18).
● Einlegen der ersten Zahnradstufe ZA1 der ersten Vorgelegewelle 16: Die Drehzahl der ersten Vorgelegewelle 16 wird - entsprechend der Übersetzung der ersten Zahnradstufe ZA1 - an die Drehzahl des zweiten Losrades z8 der ersten Zahnradstufe ZA1 angepasst, beispielsweise erhöht. Es erfolgt eine Synchronisation der ersten Vorgelegewelle 16 mit der Ausgangswelle 12 (Fig. 19).
● Schließen der ersten Kupplung 18 bei gleichzeitigem Öffnen der zweiten Kupplung 19: Der Antrieb der Ausgangswelle 12 erfolgt nun durch die erste Vorgelegewelle 16. Die Drehzahl der Eingangswelle 11 wird entsprechend erhöht (Fig. 20).
● Deaktivieren der niedrigsten Gangstellung der zweiten Vorgelegewelle 17 (Fig. 21);
● Schließen der zweiten Kupplung 19: Die zweite Vorgelegewelle 17 wird dadurch - entsprechend der erhöhten Drehzahl der Eingangswelle 11 - beschleunigt und mit der Eingangswelle 11 synchronisiert (Fig. 22).
● Schalten der Schalteinrichtung 201 des Bereichsgruppengetriebes 21 in eine Neutralposition: Das Planetengetriebe 24 ist somit momentenfrei geschaltet. Das Hohlrad 24h des Planetengetriebes 24 wird verzögert (Fig. 23).
● Einlegen einer höheren, vorzugsweise der zweithöchsten, Gangstellung 4 der zweiten Vorgelegewelle 17: Die Drehzahl der Hauptwelle 13 wird entsprechend der gewählten höheren Gangstellung 4 erhöht und mit der zweiten Vorgelegewelle 17 synchronisiert. Das Hohlrad 24h des Planetengetriebes 24 wird weiter verzögert (Fig. 23). Danach kann die höhere Gangstellung 4 der zweiten Vorgelegewelle 17 deaktiviert und gleich darauf die höchste Gangstellung 6 der zweiten Vorgelegewelle 17 eingelegt werden. Die Drehzahl der Hauptwelle 13 wird dadurch entsprechend der gewählten höchsten Gangstellung 6 der zweiten Vorgelegewelle 17 weiter erhöht. Das Hohlrad 24h des Planetengetriebes 24 wird weiter verzögert (Fig. 24).
● Öffnen der zweiten Kupplung 19 (Fig. 25);
● Umschalten des Bereichsgruppengetriebes 21 auf die langsame Bereichsgruppe LOW: Das Hohlrad 24h des Planetengetriebes 24 wird festgehalten(Fig. 26).
● Schließen der zweiten Kupplung 19 bei gleichzeitigem Öffnen der ersten Kupplung 18: Der Antrieb der Ausgangswelle 12 erfolgt nun durch zweite Vorgelegewelle 17. Die Drehzahl der Eingangswelle 11 wird entsprechend erhöht (Fig. 27).
● Danach kann die erste Zahnradstufe ZA1 der ersten Vorgelegewelle 16 deaktiviert (Fig. 27) und die erste Kupplung 18 geschlossen werden (Fig. 28). Die Drehzahl der ersten Vorgelegewelle 16 wird somit entsprechend der Drehzahl der Eingangswelle 11 erhöht und für weiter Schaltvorgänge vorbereitet.

Ist der Bereichswechsel erfolgt, kann der nächstniedere Gang 6 eingelegt werden und mittels Kupplungswechsel 18 auf 19 wieder eine normale Lastschaltung vollzogen werden.

Somit kann ohne Zugkraftunterbrechung ein Schalten des Bereichsgruppengetriebes 21 durchgeführt werden, wobei alle Gänge mit unterschiedlichen Übersetzungsverhältnissen ausgebildet sein können.

Der modulare Aufbau ermöglicht auch eine Anwendung und ein Aufrüsten von bereits bestehenden Getrieben. Somit ist ein Einsatz bei den gängigsten Doppelkupplungsgetrieben mit Bereichsgruppe möglich.

## Patentansprüche

1. Verfahren zum Betreiben eines Doppelkupplungsgetriebes (10) für ein Kraftfahrzeug, mit einer Eingangswelle (11), einer Ausgangswelle (12) und einer Hauptwelle (13), wobei die Eingangswelle (11) über eine schaltbare erste Kupplung (18) die erste Vorgelegewelle (16) und/oder über eine schaltbare zweite Kupplung (19) die zweite Vorgelegewelle (17) antreibt, und die erste und die zweite Vorgelegewelle (16, 17) jeweils über zumindest eine schaltbare Zahnradstufe (ZA1, ZA2, ZA3, ZA4, ZA5, ZA6) die Hauptwelle (13) antreibt, sowie mit einem zumindest ein Planetengetriebe (24) aufweisenden Bereichsgruppengetriebe (21) zum Umschalten zwischen einer langsamen und einer schnellen Bereichsgruppe (LOW, HIGH), **dadurch gekennzeichnet, dass** für einen zugkraftunterbrechungsfreien Hochschaltvorgang von der langsamen Bereichsgruppe (LOW) in die schnelle Bereichsgruppe (HIGH) - ausgehend von einer höchsten Gangstellung (6) aller Zahnradstufen (ZA2, ZA4, ZA6) der zweiten Vorgelegewelle (17) bei geschlossener erster und zweiter Kupplung (18, 19) und einer in Neutralposition befindenden Schaltmuffe (202a) der weiteren Schalteinrichtung (202) - folgende Schritte durchgeführt werden:
a1) Trennen der ersten Vorgelegewelle (16) von der Eingangswelle (11);
b1) Synchronisieren einer ersten Zahnradstufe (ZA1) mit der Ausgangswelle (12);
c1) Synchronisieren der ersten Vorgelegewelle (16) mit der ersten Zahnradstufe (ZA1);
d1) Wechsel des Antriebes der Ausgangswelle (12) von der zweiten auf die erste Vorgelegewelle (17, 16);
e1) Drehmomentfreischalten des Planetengetriebes (24) des Bereichsgruppengetriebes (21);
f1) Synchronisieren der zweiten Vorgelegewelle (17) mit der Eingangswelle (11);
g1) Verzögern der Hauptwelle (13) durch Synchronisieren mit der zweiten Vorgelegewelle (17) in einer Gangstufe der zweiten Vorgelegewelle (17) unterhalb der höchsten Gangstufe (6);
h1) Trennen der zweiten Vorgelegewelle (17) von der Eingangswelle (11) und von der Hauptwelle (13);
i1) Umschalten des Bereichsgruppengetriebes (21) auf die schnelle Bereichsgruppe (HIGH), vorzugsweise durch Blocken des Planetengetriebes (24);
j1) Vermindern der Drehzahl der zweiten Vorgelegewelle (17) durch Synchronisieren mit der Hauptwelle (13) in der niedrigsten Gangstufe (2) der zweiten Vorgelegewelle (17);
k1) Wechsel des Antriebes der Ausgangswelle (12) von der ersten auf die zweite Vorgelegewelle (16, 17);

2. Verfahren nach Anspruch 1, **dadurch gekennzeichnet, dass** folgende Schritte durchgeführt werden:
a2) Öffnen der ersten Kupplung (18);
b2) Verbinden der Schaltmuffe der weiteren Schalteinrichtung (202) mit der Ausgangswelle (12);
c2) Einlegen der ersten Zahnradstufe (ZA1) der ersten Vorgelegewelle (16);
d2) Schließen der ersten Kupplung (18) bei gleichzeitigem Öffnen der zweiten Kupplung (19);
e2) Umschalten des Bereichsgruppengetriebes (21) in eine Neutralposition;
f2) Schließen der zweiten Kupplung (19)
g2) Einlegen einer niedrigeren, vorzugsweise der zweithöchsten, Gangstellung (4) der zweiten Vorgelegewelle (17);
h2) Öffnen der zweiten Kupplung (19);
i2) Deaktivieren der niedrigeren Gangstellung (4) der zweiten Vorgelegewelle (17);
j2) Umschalten des Bereichsgruppengetriebes auf die schnelle Bereichsgruppe (HIGH);
k2) Einlegen der niedrigsten Gangstellung (2) der zweiten Vorgelegewelle (17);
l2) Schließen der zweiten Kupplung (19) bei gleichzeitigem Öffnen der ersten Kupplung (18).

3. Verfahren nach Anspruch 2, **dadurch gekennzeichnet, dass** nach Schritt j2) folgende Schritte durchgeführt werden:
j21) Schließen der zweiten Kupplung (19);
j22) Öffnen der zweiten Kupplung (19).

4. Verfahren nach Anspruch 2 oder 3, **dadurch gekennzeichnet, dass** nach Schritt l2) folgende Schritte durchgeführt werden:
l21) Deaktivieren der erste Zahnradstufe (ZA1);
l22) Schließen der ersten Kupplung (18).

5. Verfahren zum Betreiben eines Doppelkupplungsgetriebes (10) für ein Kraftfahrzeug, mit einer Eingangswelle (11), einer Ausgangswelle (12) und einer Hauptwelle (13), wobei die Eingangswelle (11) über eine schaltbare erste Kupplung (18) die erste Vorgelegewelle (16) und/oder über eine schaltbare zweite Kupplung (19) die zweite Vorgelegewelle (17) antreibt, und die erste und die zweite Vorgelegewelle (16, 17) jeweils über zumindest eine schaltbare Zahnradstufe (ZA1, ZA2, ZA3, ZA4, ZA5, ZA6) die Hauptwelle (13) antreibt, sowie mit einem zumindest ein Planetengetriebe (24) aufweisenden Bereichsgruppengetriebe (21) zum Umschalten zwischen einer langsamen und einer schnellen Bereichsgruppe (LOW, HIGH), **dadurch gekennzeichnet, dass** für einen zugkraftunterbrechungsfreien Runterschaltvorgang von der schnellen Bereichsgruppe (HIGH) in die langsame Bereichsgruppe (LOW) - ausgehend von einer niedrigsten Gangstellung (2) der Zahnradstufen (ZA2, ZA4, ZA6) der zweiten Vorgelegewelle (17) bei geschlossener erster und zweiter Kupplung (18, 19) und einer sich in drehfester Verbindung mit der Ausgangswelle (12) befindenden Schaltmuffe (202a) der weiteren Schalteinrichtung (202) - folgende Schritte durchgeführt werden:
a3) Trennen der ersten Vorgelegewelle (16) von der Eingangswelle (11);
b3) Synchronisieren der ersten Vorgelegewelle (16) mit der ersten Zahnradstufe (ZA1);
c3) Wechsel des Antriebes der Ausgangswelle (12) von der zweiten auf die erste Vorgelegewelle (17, 16);
d3) Beschleunigen der zweiten Vorgelegewelle (17) durch Synchronisieren mit der Eingangswelle (11);
e3) Drehmomentfreischalten des Planetengetriebes (24) des Bereichsgruppengetriebes (21);
f3) Beschleunigen der Hauptwelle (13) durch Synchronisieren mit der zweiten Vorgelegewelle (17) in einer Gangstufe der zweiten Vorgelegewelle (17) oberhalb der niedrigsten Gangstufe (2);
g3) Trennen der zweiten Vorgelegewelle (17) von der Eingangswelle (11);
h3) Umschalten des Bereichsgruppengetriebes (21) auf die langsame Bereichsgruppe (LOW), vorzugsweise durch Festhalten des Hohlrades (24h) des Planetengetriebes (24);
i3) Wechsel des Antriebes der Ausgangswelle (12) von der ersten auf die zweite Vorgelegewelle (16, 17);

6. Verfahren nach Anspruch 5, **dadurch gekennzeichnet, dass** folgende Schritte durchgeführt werden:
a4) Öffnen der ersten Kupplung (18);
b4) Einlegen der ersten Zahnradstufe (ZA1) der ersten Vorgelegewelle (16);
c4) Schließen der ersten Kupplung (18) bei gleichzeitigem Öffnen der zweiten Kupplung (19);
d4) Deaktivieren der niedrigsten Gangstellung (2) der zweiten Vorgelegewelle (17);
e4) Schließen der zweiten Kupplung (19);
f4) Schalten des Bereichsgruppengetriebes (21) in eine Neutralposition;
g4) Einlegen einer höheren, vorzugsweise der zweithöchsten, Gangstellung (4) der zweiten Vorgelegewelle (17);
h4) Öffnen der zweiten Kupplung (19);
i4) Umschalten des Bereichsgruppengetriebes (21) auf die langsame Bereichsgruppe (LOW);
j4) Schließen der zweiten Kupplung (19) bei gleichzeitigem Öffnen der ersten Kupplung (18).

7. Verfahren nach Anspruch 6, **dadurch gekennzeichnet, dass** nach Schritt g4) folgende Schritte durchgeführt werden:
g41) Deaktivieren der höheren Gangstellung (4) der zweiten Vorgelegewelle (17);
g42) Einlegen der höchsten Gangstellung (6) der zweiten Vorgelegewelle (17).

8. Verfahren nach Anspruch 6 oder 7, **dadurch gekennzeichnet, dass** nach Schritt j4) folgende Schritte durchgeführt werden:
j41) Deaktivieren der erste Zahnradstufe (ZA1) der ersten Vorgelegewelle (16);
j42) Schließen der ersten Kupplung (18).

9. Doppelkupplungsgetriebe (10) für ein Kraftfahrzeug, mit einer Eingangswelle (11), einer Ausgangswelle (12) und einer Hauptwelle (13), wobei die Eingangswelle (11) über eine erste Getriebestufe (14) und eine koaxial zu einer ersten Vorgelegewelle (16) angeordnete schaltbare erste Kupplung (18) mit der ersten Vorgelegewelle (16) und über eine koaxial zu einer zweiten Vorgelegewelle (17) angeordneten schaltbare zweite Kupplung (19) mit einer zweiten Vorgelegewelle (17) antriebsverbindbar ist, wobei die erste Vorgelegewelle (16) und die zweite Vorgelegewelle (17) jeweils über zumindest eine über eine Schalteinrichtung (20) schaltbare Zahnradstufe (ZA1, ZA2, ZA3, ZA4, ZA5, ZA6) mit der Hauptwelle (13) antriebsverbindbar ist, und wobei zwischen der Hauptwelle (13) und einer Ausgangswelle (12) des Doppelkupplungsgetriebes ein Bereichsgruppengetriebe (21) angeordnet ist, **dadurch gekennzeichnet, dass** zumindest eine Vorgelegewelle (16, 17) über eine schaltbare erste oder zweite Zahnradstufe (ZA1, ZA2) und eine weitere Schalteinrichtung (202) wahlweise mit der Hauptwelle (13) oder mit der Ausgangswelle (12) antriebsverbindbar ist, wobei vorzugsweise die weitere Schalteinrichtung (202) koaxial zur Hauptwelle (13) und/oder Ausgangswelle (12) angeordnet ist.

10. Doppelkupplungsgetriebe (10) nach Anspruch 9, **dadurch gekennzeichnet, dass** die erste und/oder zweite Zahnradstufe (ZA1, ZA2) ein koaxial zur ersten oder zweiten Vorgelegewelle (16, 17) angeordnetes erstes Losrad (z5) und ein koaxial zur Hauptwelle (13) angeordnetes zweites Losrad (z8) aufweist.

11. Doppelkupplungsgetriebe (10) nach Anspruch 9 oder 10, **dadurch gekennzeichnet, dass** das zweite Losrad (z8) drehfest mit einer Schaltmuffe (202a) der weiteren Schalteinrichtung (202) verbunden ist, wobei die Schaltmuffe (202a) in einer ersten Schaltstellung mit der Hauptwelle (13) und in einer zweiten Schaltstellung mit der Ausgangswelle (12) drehfest verbunden ist.

12. Doppelkupplungsgetriebe (10) nach einem der Ansprüche 9 bis 11, **dadurch gekennzeichnet, dass** das Bereichsgruppengetriebe (21) ein vorzugsweise als Stirnradplanetengetriebe ausgebildetes Planetengetriebe (24) aufweist.

13. Doppelkupplungsgetriebe (10) nach einem der Ansprüche 9 bis 12, **dadurch gekennzeichnet, dass** die erste und die zweite Getriebestufe (14, 15) unterschiedliche Übersetzungsverhältnisse aufweisen, wobei vorzugsweise der Übersetzungssprung zwischen erster und zweiter Getriebestufe (14, 15) dem gewünschten Übersetzungssprung zwischen den einzelnen Getriebegängen entspricht.

14. Doppelkupplungsgetriebe (10) nach einem der Ansprüche 9 bis 13, **dadurch gekennzeichnet, dass** die Eingangswelle (11) mit der Hauptwelle (13) direkt über eine zusätzliche Schalteinrichtung (40) verbindbar ist.

15. Doppelkupplungsgetriebe (10) nach einem der Ansprüche 9 bis 14, **dadurch gekennzeichnet, dass** das Doppelkupplungsgetriebe (10) einen Kupplungsteil (50), einen Hauptgetriebeteil (60) und einen Bereichsgruppengetriebeteil (70) aufweist, wobei vorzugsweise die weitere Schalteinrichtung (202) im Hauptgetriebeteil (60) angeordnet ist.
